# EUROPÄISCHE PATENTSCHRIFT

(11) **EP 0 781 645 B1**
(45) Veröffentlichungstag und Bekanntmachung des Hinweises auf die Patenterteilung: **13.06.2001**
(21) Anmeldenummer: 96119592.2
(22) Anmeldetag: 06.12.1996
(51) Int. Cl.: B30B 9/24, A22C 17/04, B32B 7/02, B32B 25/08, B07B 1/22

(54) **Quetschband für Separatoren**
Squeezing belt for separators
Courroie d'écrasement pour séparateur

(30) Priorität: 27.12.1995 DE 29520564 U
(43) Veröffentlichungstag der Anmeldung: 02.07.1997
(73) Patentinhaber: NORDISCHER MASCHINENBAU RUD. BAADER GMBH + CO KG, 23560 Lübeck (DE)
(72) Erfinder: Kunig, Helmut, 23611 Bad Schwartau (DE)
(74) Vertreter: Patentanwälte Wenzel & Kalkoff

(56) Entgegenhaltungen:
- DE-A- 2 133 954
- US-A- 5 302 150

## Beschreibung

Die Erfindung betrifft ein endloses und flexibles Quetschband für Separatoren, d. h. für Maschinen mit einer eine perforierte Mantelfläche aufweisenden Lochtrommel, an die das Quetschband unter partieller Umschlingung andrückbar ist und eine Eingabezone zur Einführung von zu trennendem Gut zwischen Lochtrommel und Quetschband bildet.

Mehrschichtige Quetschbänder entsprechend dem Oberbegriff des Anspruch 1 sind aus US-A-5 302 150 bekannt.

Derartige Separatoren dienen beispielsweise der Trennung von Fleisch von Knochen, Sehnen, Bändern und Häuten, Fischfleisch von Gräten, d. h. allgemein der Trennung von fließfähigen und weniger fließfähigen Bestandteilen von entsprechenden Stoffgemischen, und finden vornehmlich in der Lebensmittelindustrie Verwendung. Die in solchen Separatoren verwendeten Quetschbänder sollen daher trotz hoher Beanspruchung keinen Abrieb aufweisen und müssen aus Gründen der Wirtschaftlichkeit hoch strapazierfähig sein.

Aufgrund des Lebensmittelkontaktes der Quetschbänder ist die Auswahl der in Frage kommenden Werkstoffe auf physiologisch unbedenkliche Materialien beschränkt, wobei diesbezüglich speziell eingestellte Polyurethan-Werkstoffe gegenüber Gummi-Werkstoffen den Vorzug höherer Abriebfestigkeit und Zähigkeit haben, während letztere bezüglich ihrer Rückstellfähigkeit (Elastizität) Vorteile aufweisen.

Die aus der bestimmungsgemäßen Anwendung resultierende Beanspruchung des Quetschbandes konzentriert sich vornehmlich auf bestimmte Bandbereiche. So bewirkt der Kontakt des Quetschbandes mit der perforierten Lochtrommel in Verbindung mit der Walkbeanspruchung durch die Anpreßkräfte sowie die produktabhängige örtliche Verformung durch Hartpartikel eine Abrieb- und Strukturbeanspruchung der Oberdecke. Ebenso erfährt die Unterdecke eine Abrieb- und Strukturbeanspruchung durch eine den Preßdruck des Quetschbandes gegen die Lochtrommel erzeugende Andruckwalze und die das Quetschband führenden Bandführungsmittel wie Umlenkwalzen und Abstützsysteme, wobei letztere insbesondere die Randbereiche der Unterdecke beanspruchen. Schließlich ergibt sich durch Entlanggleiten des Quetschbandes an seitlich führenden Begrenzungen eine Abriebbeanspruchung im Bereich der seitlichen Bandkanten.

Alles dieses führt dazu, daß das Quetschband im Extremfall, d. h. beispielsweise bei Verarbeitung knochenhaltigen Fleisches, bereits nach zwei Arbeitsschichten ausgewechselt werden muß, um zu vermeiden, daß Bandpartikel in das Produkt gelangen. Die Wirtschaftlichkeit des Trennprozesses ist daher in hohem Maße unbefriedigend.

Es ist die Aufgabe der Erfindung, ein Quetschband für Separatoren der eingangs beschriebenen Art anzugeben, das auf vergleichsweise einfache und kostengünstige Weise herstellbar ist und eine wesentlich verbesserte Haltbarkeit aufweist.

Diese Aufgabe wird durch die Merkmale des Anspruchs 1 gelöst. Demnach weist das Quetschband einen Mehrschichtaufbau auf, umfassend eine Unterdecke, eine Zwischendecke mit mindestens einer hoch zugfesten Einlage und eine Lose auf der Zwischendecke aufliegende Oberdecke. Die mit einem solchen Aufbau erzielbaren Vorteile bestehen im wesentlichen darin, daß den einzelnen Bandzonen jeweils Materialeigenschaften zugeordnet werden können, die auf die jeweilige örtliche Beanspruchung eingestellt sind.

Nach einer Ausführungsart ergibt sich für das Quetschband ein verbessertes Vermögen, Grobpartikel ohne Zerstörung der Bandstruktur einzubetten und durch den Prozeß zu führen, wenn die Zwischendecke gegenüber der Unterdecke eine geringere oder gleiche Shore A -Härte von 30 bis 70 Shore aufweist, wobei die Verwendung gleicher Grundstoffe, beispielsweise Gummi, eine unproblematische Verbindung im Grenzschichtbereich zwischen Unter- und Zwischendecke ermöglicht. Je nach Materialauswahl kann diese Verbindung wahlweise durch Polymerisation, Vulkanisation, Klebung, Schweißung oder Klettung erfolgen.

Nach einer Ausführungsart kann durch Verwendung einer Polyurethan-Folie mit einer Shore A -Härte von 65 bis 95 als Oberdecke der "Einstechwiderstand" des Quetschbandes verbessert werden, was insbesondere bei der Verarbeitung von knochenhaltigem Fleisch eine Verbesserung der Haltbarkeit des Quetschbandes mit sich bringt. Diese die Oberdecke bildende PU-Folie ist nach der Erfindung als lose auf der Zwischendecke aufliegendes und dabei separat geführtes Endlosband ausgebildet, was die Möglichkeit einer wirtschaftlichen Anpassung des Quetschbandes an individuelle Erfordernisse bietet.

Eine derartige Deckschicht kann vorteilhaft auch im Bereich der Randzonen der Unterdecke vorgesehen sein. Dabei können diese Deckschichten ebenfalls als lose aufliegendes Endlosband ausgebildet sein und aus Gurten mit hochfesten Einlagen bestehen. Bei gemeinsamer Führung mit dem Quetschband im Kontaktbereich desselben mit der Lochtrommel ergibt sich so bei strammer Spannung eine flächige Stützung des Quetschbandes mit dem Effekt einer Begrenzung der Ausbeulung desselben, insbesondere im Bereich der Eingabezone.

Weitere vorteilhafte Ausführungsarten der Erfindung sind den übrigen Unteransprüchen zu entnehmen und gehen aus der folgenden Beschreibung der in der Zeichnung schematisch dargestellten Ausführungsbeispiele hervor. Er zeigt
- Fig. 1: einen Teilquerschnitt durch ein Quetschband, das nicht der Festlegung nach Anspruch 1 entspricht, aber der allgemeinen Erläuterung dient,
- Fig. 2: einen Teilquerschnitt durch ein Quetschband nach der Erfindung, und
- Fig. 3: die Quetschbänder nach Figur 2 in Funktionsdarstellung.

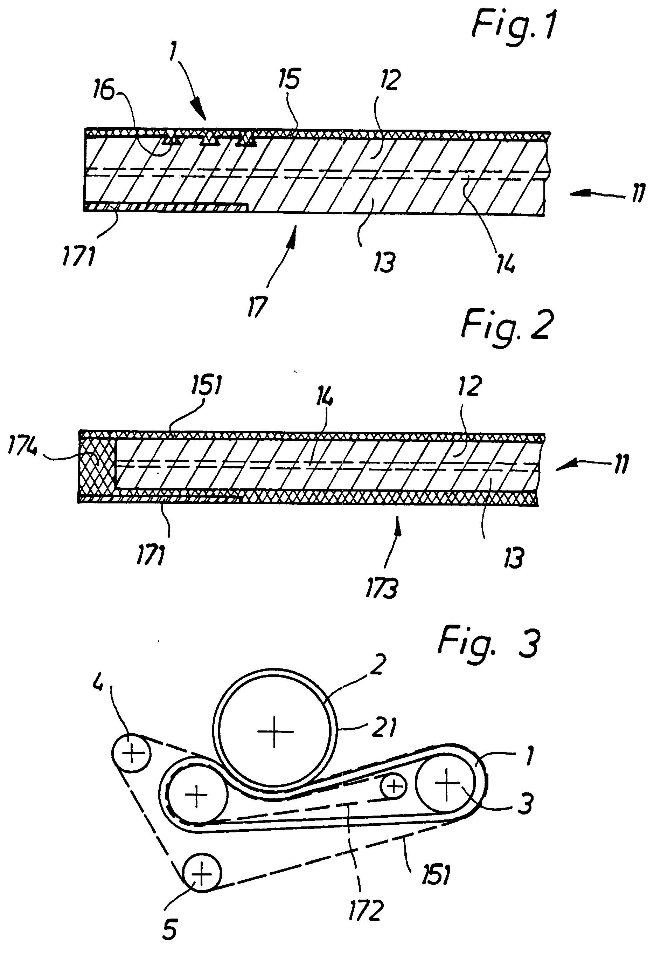

Fig. 1 zeigt ein aus mehreren Materialschichten aufgebautes Quetschband 1, welches an eine Lochtrommel 2 mit perforierter Mantelfläche 21 anpreßbar ist. Entsprechend der gezeigten Querschnittdarstellung weist das Quetschband 1 eine Zwischendecke 11 auf, die aus vorzugsweise zwei Schichten 12 und 13 besteht, die zwischen sich eine Einlage 14 beispielsweise aus fadenförmigen, in BandLängsrichtung gewickelten und eine endlose Lage bildenden zugfesten Zugstränge aufnehmen. Die Bezeichnung "zugfest" steht hier für eine hohe Streckgrenze und hohe Elastizität. Die Verbindung der Schichten 12 und 13 sowie die Einbindung der Einlage 14 erfolgt je nach verwendeten Materialien durch Polymerisation, Vulkanisieren, Schweißen oder Kleben. Entsprechend Fig. 1 ist die Zwischendecke 11 arbeitsseitig mit einer gesonderten Oberdecke 15 versehen. Die Oberdecke 15 ist dabei je nach Anwendungsfall mit der Zwischendecke 11 innig verbunden, was je nach Materialauswahl durch die erwähnten Verbindungstechniken erreicht wird und wobei die Haltbarkeit dieser Verbindungen durch Profilierungen 16 an den Verbindungsflächen wie in Fig. 1 angedeutet aufgrund der damit bewirkten formschlüssigen Verkettung verbesserbar ist.

Entsprechend Fig. 3 ist die Oberdecke 15 erfindungsgemäß als separates Endlosband 151 ausgeführt, das durch geeignet plazierte Umlenkwalzen 3, 4, 5 im Arbeitsbereich des Quetschbandes 1 gemeinsam mit diesem geführt ist.

Das Quetschband 1 weist weiter eine Unterdecke 17 auf, die die Zwischendecke 11 vollflächig abdeckt oder lediglich im Bereich der Randzonen des Quetschband 1 , d. h. wie in Fig. 1 gezeigt, aus zwei Teildecken 171 bestehen kann. Je nach Anwendungsfall ist die Unterdecke 17 bzw. sind die Teildecken 171 mit der Zwischendecke 11 in der erwähnten Weise innig verbunden oder entsprechend Fig. 3 als separates Endlosband 172 geführt, das im Arbeitsbereich des Quetschbandes 1 gemeinsam mit diesem geführt ist.

Entsprechend Fig. 2 ist die Unterdecke 17 als U-förmig profilierte Unterdecke 173 ausgebildet, wobei die Zwischendecke 11 zwischen U-Stegen 174 aufgenommen und von diesen seitlich abgedeckt ist. Auf diese Weise erfolgt eine seitliche Abdeckung der Einlage 14 , die bei Fertigung der Quetschbänder in Überbreite und anschließender Längsteilung zumindest bereichsweise seitlich offenliegt. Die Höhe der U-Stege 174 entspricht der Dicke der Zwischendecke 11 , so daß das die Oberdecke 15 bildende Endlosband 151 mit der Unterdecke 173 eine Art Rahmen bildet, in den die Zwischendecke 11 eingeschlossen ist.

Optimale Ergebnisse im Sinne der Aufgabenstellung bringt ein entsprechend den Figuren 1 und 2 aufgebautes Quetschband 1 , welches umfaßt: eine Zwischendecke 1 aus Gummi mit einer Shore A -Härte von 30 bis 70, vorzugsweise 60 bis 70, eine Oberdecke 15 aus einer Polyurethan-Folie mit einer Shore A -Härte von 65 bis 95, vorzugsweise 75 bis 90 und eine Unterdecke 17 aus einer Polyurethan-Folie einer Shore A -Härte von 65 bis 95, vorzugsweise bis 75 bis 90. Bei lose aufliegend geführter Unterdecke 17 hat sich ein eine Einlage aus Aramidfasern umfassender Polyurethan-Gurt einer Shore A -Härte von ca. 80 bewährt.

## Patentansprüche

1. Endloses und flexibles Quetschband (1) für Separatoren, d.h. für Maschinen mit einer eine perforierte Mantelfläche (21) aufweisenden Lochtrommel (2), an die das Quetschband (1) unter partieller Umschlingung andrückbar ist und eine Eingabezone zur Einführung von zu trennendem Gut zwischen Lochtrommel (2) und Quetschband (1) bildet, wobei das Quetschband (1) einen Mehrschichtaufbau umfassend eine Unterdecke (17), eine Zwischendecke (11) mit mindestens einer hochzugfesten Einlage (14) und eine Oberdecke (15) aufweist, **dadurch gekennzeichnet**, daß die Oberdecke (15) als lose auf der Zwischendecke (11) aufliegendes Endlosband (151) ausgebildet ist.

2. Quetschband nach Anspruch 1, **dadurch gekennzeichnet**, daß die Zwischendecke (11) und die Unterdecke (17) aus gleichem Material gleicher oder unterschiedlicher Shore A-Härte, beispielsweise aus Gummi, bestehen.

3. Quetschband nach Anspruch 1 oder 2, dadurch **gekennzeichnet**, daß die Oberdecke (15) aus einer Polyurethan-Folie mit einer Shore A-Härte von 75 bis 90 besteht.

4. Quetschband nach einem der vorhergehenden Ansprüche, **dadurch gekennzeichnet**, daß das Endlosband (151) separat geführt ist.

5. Quetschband nach einem der vorhergehenden Ansprüche, **dadurch gekennzeichnet**, daß die Unterdecke (17) im Bereich ihrer Randzonen eine hochfeste und verschleißarme Deckschicht (171) aufweist.

6. Quetschband nach einem der vorhergehenden Ansprüche, **dadurch gekennzeichnet**, daß die Deckschichten (171) im Bereich der Randzonen der Unterdecke (17) aus Polyurethan-Folie mit einer Shore A-Härte von 75 bis 90 bestehen.

7. Quetschband nach einem der vorhergehenden Ansprüche, **dadurch gekennzeichnet**, daß jede Deckschicht (171) als lose aufliegendes Endlosband (172) ausgebildet ist.

8. Quetschband nach einem der vorhergehenden Ansprüche, **dadurch gekennzeichnet**, daß die die Deckschichten (171) im Bereich der Randzonen bildenden Endlosbänder (172) aus Gurten mit hochfesten Einlagen bestehen.

9. Quetschband nach einem der vorhergehenden Ansprüche, **dadurch gekennzeichnet**, daß die Deckschichten (171) im Bereich der Randzonen bildenden Endlosbänder (172) lediglich im wesentlichen im Kontaktbereich des Quetschbandes (1) mit der Lochtrommel (2) gemeinsam mit diesem geführt sind.

10. Quetschband nach einem der vorhergehenden Ansprüche, **dadurch gekennzeichnet**, daß eine Unterdecke (173) als im Querschnitt U-förmiges Profil ausgebildet ist, wobei das U-Profil eine Aufnahme für die Zwischendecke (11) mit der Einlage (14) bildet und daß die Oberdecke (151) eine das U-Profil abdeckende Schicht (151) bildet.

11. Quetschband nach einem der vorhergehenden Ansprüche, **dadurch gekennzeichnet**, daß die Einlage (14) aus Polyamid-, Polyester-, Aramid-Corden, Geweben oder deren Abkömmlingen besteht oder aus einem Gemisch dieser Komponenten.

12. Quetschband nach einem der vorhergehenden Ansprüche, **dadurch gekennzeichnet**, daß die Einlage (14) aus Stahlcorden oder Stahlgeweben besteht.

## Claims

1. Endless, flexible squeeze belt (1) for separators, i.e. for machines wich a perforated drum (2) which has a perforated peripheral surface (21) and against which the squeeze belt (1) can be pressed with partial wrap and forms an input zone for the introduction of material to be separated between perforated drum (2) and squeeze belt (1) , wherein the squeeze belt (1) has a multilayered structure including a lower layer (17), an intermediate layer (11) with at least one high-tensile inlay (14) and an upper layer (15), characterised in that the upper layer (15) is constructed as an endless belt (151) resting loosely on the intermediate layer (11).

2. Squeeze belt according to claim 1, characterised in that the intermediate layer (11) and the lower layer (17) are made of the same material having the same or different Shore A hardness, for example rubber.

3. Squeeze belt according to claim 1 or 2, characterised in that the upper layer (15) consists of a polyurethane film having a Shore A hardness of 75 to 90.

4. Squeeze belt according to any of the preceding claims, characterised in that the endless belt (151) is guided separately.

5. Squeeze belt according to any of the preceding claims, characterised in that the lower layer (17) in the region of its edge zones comprises a high-strength, low-wear covering layer (171).

6. Squeeze belt according to any of the preceding claims, characterised in that the covering layers (171) in the region of the edge zones of the lower layer (17) consist of polyurethane film having a Shore A hardness of 75 to 90.

7. Squeeze belt according to any of the preceding claims, characterised in that each covering layer (171) is constructed as an endless belt (172) loosely resting on top.

8. Squeeze belt according to any of the preceding claims, characterised in that the endless belts (172) forming the covering layers (171) in the region of the edge zones consist of belts with high-strength inlays.

9. Squeeze belt according to any of the preceding claims, characterised in that the endless belts (172) forming covering layers (171) in the region of the edge zones are guided together with the squeeze belt (1) only essentially in the region of contact of the squeeze belt (1) with the perforated drum (2).

10. Squeeze belt according to any of the preceding claims, characterised in that a lower layer (173) is constructed as a profile of U-shaped cross-section, wherein the U-profile forms a seat for the intermediate layer (11) with the inlay (14), and in that the upper layer (151) forms a layer (151) covering the U-profile.

11. Squeeze belt according to any of the preceding claims, characterised in that the inlay (14) is made of polyamide, polyester, aramide cords, woven fabrics or derivatives thereof or a mixture of these components.

12. Squeeze belt according to any of the preceding claims, characterised in that the inlay (14) consists of steel cords or woven steel fabrics.

## Revendications

1. Bande compressible (1), souple et sans fin, pour séparateurs, c'est-à-dire pour machines comportant un tambour perforé (2), qui comporte une surface latérale perforée (21), tambour qui peut être pressé contre la bande compressible (1) avec formation d'un enroulement partiel, et qui forme une zone d'entrée pour introduire la matière à séparer entre le tambour perforé (2) et la bande compressible (1), où la bande compressible (1) présente une structure multicouche, qui comprend une couche inférieure (17), une couche intermédiaire (11) avec au moins une garniture (14) à grande résistance à la trac-ion, et une couche supérieure (15), caractérisée en ce que la couche supérieure (15) est configurée comme une bande sans fin (151 ) lâche placée sur la couche intermédiaire (11).

2. Bande compressible selon la revendication 1, caractérisée en ce que la couche intermédiaire (11) et la couche inférieure (17) sont en un matériau de même nature, qui a une dureté Shore A identique ou différente, par exemple en caoutchouc.

3. Bande compressible selon la revendication 1 ou 2, caractérisée en ce que la couche supérieure (15) est constituée d'une feuille de polyuréthanne ayant une dureté Shore A de 75 à 90.

4. Bande compressible selon l'une des revendications précédentes, caractérisée en ce que la bande sans fin (151) est guidée séparément.

5. Bande compressible selon l'une des revendications précédentes, caractérisée en ce que la couche inférieure (17) comporte au niveau de ses zones marginales une couche de couverture (171) à grande résistance mécanique et présentant une faible usure.

6. Bande compressible selon l'une des revendications précédentes, caractérisée en ce que les couches de couverture (171) sont, au niveau des zones marginales de la couche inférieure (17), constituées d'une feuille de polyuréthanne ayant une dureté Shore A de 75 à 90.

7. Bande compressible selon l'une des revendications précédentes, caractérisée en ce que chaque couche de couverture (171) est configurée comme une bande sans fin (172) disposée d'une manière lâche,

8. Bande compressible selon l'une des revendications précédentes, caractérisée en ce que les bandes sans fin (172) formant les couches de couverture (171) au niveau des zones marginales sont constituées de courroies comportant des garnitures à grande résistance mécanique.

9. Bande compressible selon l'une des revendications précédentes, caractérisée en ce que les bandes sans fin (172), formant les couches de couverture (171) au niveau des zones marginales, ne sont guidées en même temps que le tambour perforé (2), essentiellement que dans la zone de contact de la bande compressible (1) et du tambour perforé (2).

10. Bande compressible selon l'une ou plusieurs des revendications précédentes, caractérisée en ce qu'une couche inférieure (173) est configurée comme un profilé en U, le profilé en U formant un logement pour la couche intermédiaire (11) comportant la garniture (14), et en ce que la couche de couverture (151) forme une couche (151) qui recouvre le profilé en U.

11. Bande compressible selon l'une des revendications précédentes, caractérisée en ce que la garniture (14) est constituée de cordes en polyamide, en polyester, en aramide, de tissus ou de leurs dérivés, ou d'un mélange de ces composants.

12. Bande compressible selon l'une des revendications précédentes, caractérisée en ce que la garniture (14) est constituée de cordes en acier ou de tissus en acier.
